# EUROPEAN PATENT SPECIFICATION

(11) **EP 3 798 086 B1**
(45) Date of publication and mention of the grant of the patent: **02.11.2022**
(21) Application number: 20197548.9
(22) Date of filing: 22.09.2020
(51) Int. Cl.: B61D 49/00, B60L 5/39

(54) **PATINA CREATION DEVICE**
PATINAERZEUGUNGSVORRICHTUNG
DISPOSITIF DE CRÉATION DE PATINE

(30) Priority: 23.09.2019 IN 201941038348
(43) Date of publication of application: 31.03.2021
(73) Proprietor: ALSTOM Transport Technologies, 93400 Saint-Ouen-sur Seine (FR)
(72) Inventor: ASGHAR ALI, Farooqui, 560065 Bangalore Karnataka (IN)
(74) Representative: Lavoix

(56) References cited:
- CN-B- 102 275 512
- CN-B- 104 999 916
- CN-U- 203 485 776
- FR-A1- 2 737 163

## Description

The present invention relates to a patina creation device for a railway vehicle, and to a railway vehicle including such patina creation device.

It is known to have in railway vehicles a current collector shoe for sliding contact with an electric power rail, the so-called "third rail" of a railway track.

In fact, some DC versions of railway vehicles are energized through a third rail current collector device, which is always engaged with a third rail of a railway track through a carbon-copper alloy TRC shoe (third rail current collector). The TRC shoe during the runs slides on the third rail and this sliding contact generates wear on the TRC shoe, because the TRC shoe is relatively softer than the third rail.

When the third rail is new, the third rail is rough and not perfectly aligned, therefore, during an initial phase of operation, the TRC shoe wears significantly. After some periods, a layer of film of the TRC shoe, carbon - copper alloy, forms on the third rail, this layer being called patina. This thin film adds lubricity to the contact interface between the TRC shoe and the third rail, and this in turn reduces the wear of the TRC shoe.

Thanks to the patina layer, the TRC shoe maintains a sliding contact with the third rail and increases the mating surface.

The initial wear lasts for a long period, in particular, it is very severe until 50.000 Km of friction between the TRC shoe and the third rail, it is severe between 50.000 Km and 100.000 Km of friction and it is moderate between 100.000 Km and 200.000 Km, after which it stabilizes.

When stabilization has been reached, there is a further constant wear, which is inevitable. Also weather-related parameters like dust, moisture and ambient temperatures influence the wear rate. This patina creation device could be deployed during these anomalies.

Therefore, it is clear that due to the initial consumption of the TRC shoe and until the patina layer is formed, the TRC shoe set has to be frequently replaced. This is an expensive component with a long lead time to deliver.

The contact pressure between the TRC shoe and the third rail is critical for electrical contact and current collection phenomena. Since their engagement is performed through springs having a limited stiffness range and typical characteristics, it is very difficult to modify the mechanical properties or dimensions of the TRC shoe to enhance its duration.

CN 203 485 776 U discloses a current collector which comprises an insulation cover, an insulation base seat, a fuse box, a spring and a carbon sliding block. The insulation base seat is connected with the insulation cover, the fuse box is arranged between the insulation base seat and the insulation cover, a direct current fuse protector is arranged in the fuse box, a swing arm is arranged on one side of the insulation base seat, and a flexible bearing and a lock hook are respectively arranged on the left side and the right side of the upper portion of the swing arm.

CN 102 275 512 B discloses a quick boot-removing current acceptor which comprises an insulated mounting base, an adjusting assembly, a fuse assembly, a current-accepting swing arm assembly, and a lifting mechanism. The current-accepting swing arm assembly comprises a swing bar, a current-accepting sliding plate, and a core seat, and the lifting mechanism comprises a boot-removing body and a lock bolt body. The internal end of the swing bar is fixedly connected with the core seat, and the core seat is sleeved on a core shaft. The boot-removing body is fixedly arranged at one side of a current-accepting assembly mounting underframe, and one side of the boot-removing body is provided with a controllable rotary eccentric shaft. The lock bolt body is fixedly arranged on the core seat, and can make rotary motion with the core seat and the swing bar around the core shaft. Further, the lock bolt body is provided with a retractable lock latch arranged in cooperation with the eccentric shaft of the boot-removing body.

CN 104 999 916 B discloses a third-rail lower pneumatic current collector which comprises a mounting back plate assembly, a cylinder crank connecting rod assembly, a tension spring assembly, a left flexible bearing seat, a right flexible bearing seat, an insulated swinging arm, a current collecting slip shoe, an upper insulated protective cover, and a lower insulated protective cover, wherein the left flexible bearing seat and the right flexible bearing seat are connected with the swinging arm, and the current collecting slip shoe is mounted on the swinging arm.

FR 2 737 163 A1 discloses an energy collector which includes a vehicle mounting device for mounting the energy collector to such vehicle, a collector shoe for sliding electrical contact on a rail, and a lever arm having a first end and a second end. The energy collector also includes a bottom torsion unit connected to the collector shoe and connected to the second end of the lever arm. The bottom torsion unit is disposed so that the collector shoe is aligned upon such rail even when the collector shoe encounters physical deviations along a surface of such rail. The energy collector further includes a top torsion unit connected to the vehicle mounting device and connected to the first end of the lever arm. The top torsion unit is disposed so that a generally downwardly oriented force is applied to the collector shoe so as to encourage contact between the collector shoe and the rail. The energy collector further includes a shunt engageable at an initial end to such vehicle and connected at a terminal end to the collector shoe. When a potential is applied across such vehicle and such rail, the energy collector permits electrical energy to flow from such vehicle through both the shunt and the collector shoe to such rail during both static and dynamic operation of such vehicle.

There is therefore the need to reduce replacement of the TRC shoe by reducing its consumption.

This and other object are fully achieved by virtue of a patina creation device having the characteristics defined in independent claim 1, and by virtue of a railway vehicle including a patina creation device according to claim 9.

Preferred embodiments of the invention are specified in the dependent claims, whose subject-matter is to be understood as forming an integral part of the present description.

Further characteristics and advantages of the present invention will become apparent from the following description, provided merely by way of a non-limiting example, with reference to the enclosed drawings, in which:
- Figures 1 to 3 show a third rail current collector device;
- Figure 4 shows a typical patina creation device according to the present invention; and
- Figure 5 shows a railway vehicle including a patina creation device according to the present invention.

The present invention relates to a patina creation device, which is a simplified device with no current collector (devoid of electrical connectivity), arranged to be placed on a trailer railway car of a railway vehicle. The patina creation device (PCD) shoe is made up of a much softer material than the TRC shoe material, relatively 10-20% softer, and it is more easily transferrable by having a coarse contact surface almost similar to one of the TRC shoe. The material composition of the patina creation device is identical to the one of the TRC shoe because otherwise infusion of unwarranted elements would influence the electrical parameters of the TRC shoe.

The material of the patina creation device has therefore the same composition than the material of the TRC shoe, with reduced hardness and increased surface area along its length (i.e., along the rail axis).

Advantageously, the material used is a carbon-copper alloy.

In particular, the material is carbon impregnated with 25% of copper by weight.

The patina creation device is mounted with a contact pressure to the third rail preferably at least 10% higher, notably 20% higher than the one of the TRC shoe. The primary function of the patina creation device is to transfer its material onto the third rail, thus facilitating a faster patina formation. The patina layer is a coating layer on the third rail. The presence of the patina creation device reduces drastically the wear of the TRC shoe also installed on the railway vehicle.

A TRC shoe, because of its specific requirements, is very expensive and it is not wise to use it to create a layer of film. A secondary device such as the patina creation device of the present invention can be used to reduce the consumption of a TCR shoe by at least 50 - 70%.

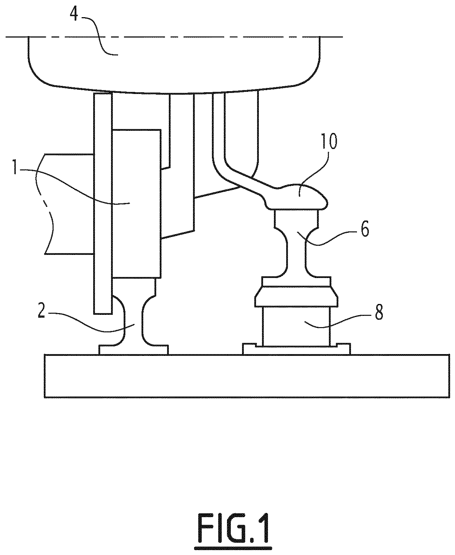

Figure 1 shows a third rail current collector device of a railway vehicle in a top contact mode.

A wheel 1 of a railway car 4 is in contact with a rail 2 of a railway line. A third rail 6, placed on an insulator layer 8, runs in parallel to the rail 2.

A TRC shoe 10 in connected on one side to the railway car 4 and, on the other side, is placed in contact, from top, with the third rail 6.

The third rail 6 is an aluminum and steel composite structure, and the surface in contact with the TRC shoe 10 is stainless steel alloy with high mechanical and electrical wear resistance.

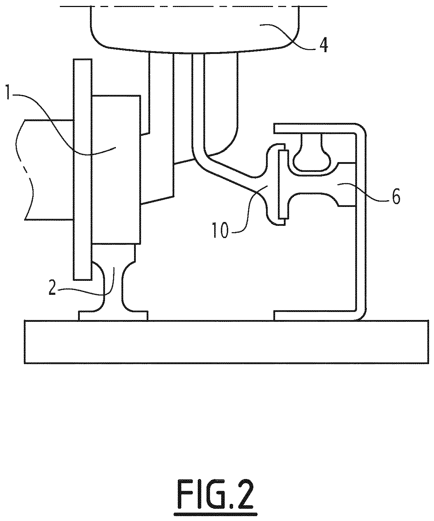

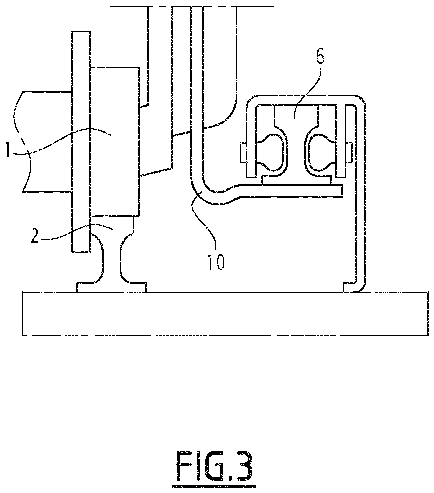

Figures 2 and 3 show the same elements of figure 1, wherein the contact between the TRC shoe 10 and the third rail 6 is done respectively from a lateral side and from the bottom.

The patina creation device is installed exactly the same way as the TRC shoe on the railway car 4. Visually, there is no difference between the two different devices. It is only electrically different.

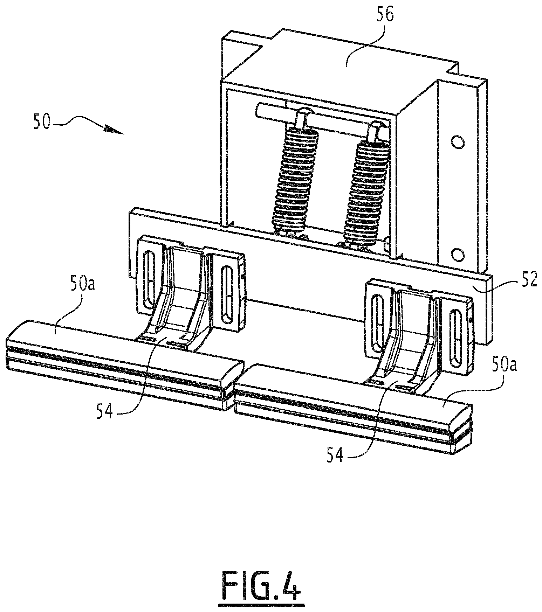

Figure 4 shows a patina creation device 50 according to the present invention. The patina creation device 50 comprises at least a bar or shoe, preferably two bars 50a, of the material above disclosed. The two bars 50a are connected to a support arm 52 through respective supporting elements 54.

Each bar 50a is between 100mm and 500mm long, between 40mm and 100mm wide, and between 40mm and 100mm thick.

Advantageously, each bar 50a is 300 mm long, 60mm wide and 40mm thick.

Advantageously, each bar 50a has any other combination of values taken from the above-indicated ranges.

The use of two bars 50a allows avoiding using a single very long bar, which would make difficult the alignment with the third rail 6.

The support arm 52 is arranged to be fixed to a support structure 56 which, in turn, is to be fixed to the railway car 4.

The support arm 52 includes components known per se and similar to the ones of the TRC shoe 10, in order to support the patina creation device 50 on the third rail 6, with the exception that electrical connectivity and pneumatic supply are not required.

The patina creation device 50 is arranged to be connected on one side to the railway car 4 and, on the other side, to be placed in contact with the third rail 6.

The patina creation device 50 can be put in contact with the third rail 6 from top, bottom and laterally, as the TRC shoe 10 illustrated on figures 1 to 3. Preferably, the patina creation device 50 is put in contact with the third rail 6 manually.

The patina creation device 50 is arranged to be consumed by friction against the third rail 6, thus forming a coating layer on said third rail 6.

The coating layer is preferably made up of a layer of carbon - copper alloy as above disclosed.

The patina creation device 50 is larger, wider and deeper with respect to the TRC shoe 10, having the preferred measures above indicated, and it forms the required patina layer on the third rail 6.

This quick formation of patina layer enhances the formation of this lubricity film on the third rail 6 reducing significantly the wear and the consumption of the TRC shoe 10.

The technical requirements for the TRC shoe 10 are stringent and this leads to high production costs. The TRC shoe 10 would be consumed quite significantly during the initial runs of the railway car 4. Therefore, thanks to the patina creation device 50, there is a reduction of the consumption of this TRC shoe 10 due to wear and this leads to a reduction of the overall running cost.

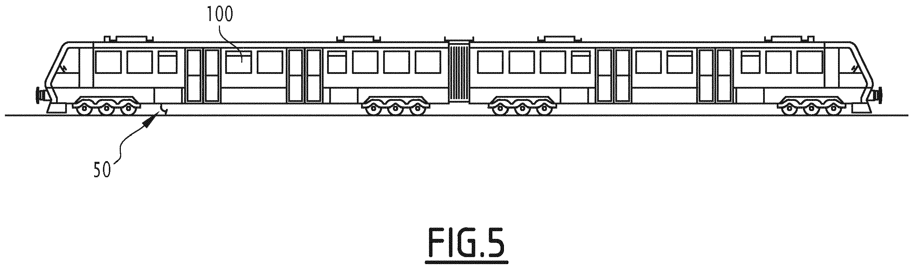

Figure 5 shows a railway vehicle 100 including a patina creation device 50 according to the present invention. The patina creation device 50 extends along the longitudinal axis of the third rail.

Clearly, the principle of the invention remaining the same, the embodiments and the details of production can be varied considerably from what has been described and illustrated purely by way of non-limiting example, without departing from the scope of protection of the present invention as defined by the attached claims.

## Claims

1. A patina creation device (50) arranged to be connected to a railway car (4), and to be put in contact with a third rail (6) running in parallel to a rail (2) of a railway line on which the railway car (4) is placed, said patina creation device (50) comprising a least one bar (50a) extending along a longitudinal axis of the third rail (6) and arranged to be consumed by friction against the third rail (6), thus forming a coating layer on said third rail (6), **characterized in that** the patina creation device (50) is devoid of electrical connectivity.

2. The patina creation device (50) according to claim 1, wherein the bar (50a) is made up of carbon-copper alloy.

3. The patina creation device according to claim 1 or 2, wherein said bar (50a) is connected to a support arm (52) through a supporting element (54), said support arm (52) being arranged to be fixed to a support structure (56) which, in turn, is to be fixed to the railway car (4).

4. The patina creation device (50) according to any of the preceding claims, wherein the bar (50a) is put in contact with the third rail (6) from the top, from the bottom or laterally.

5. The patina creation device according to any of the preceding claims, wherein each bar (50a) is between 100 and 500 mm long.

6. The patina creation device according to any of the preceding claims, wherein each bar (50a) is between 40mm and 100mm wide.

7. The patina creation device according to any of the preceding claims, wherein the bar is (50a) is between 40mm and 100mm thick.

8. The patina creation device according to any claims 5 to 7, wherein each bar (50a) is 300mm long, 60 mm wide and 40mm thick.

9. A railway vehicle (100) comprising a patina creation device (50) according to any of the preceding claims.

## Patentansprüche

1. Patina-Erzeugungsvorrichtung (50), die angeordnet ist, um mit einem Eisenbahnwagen (4) verbunden zu werden und in Kontakt mit einer dritten Schiene (6) gebracht zu werden, die parallel zu einer Schiene (2) einer Eisenbahnlinie verläuft, auf der der Eisenbahnwagen (4) platziert ist, wobei die Patina-Erzeugungsvorrichtung (50) mindestens einen Stab (50a) umfasst, der sich entlang einer Längsachse der dritten Schiene (6) erstreckt und angeordnet ist, um durch Reibung an der dritten Schiene (6) verbraucht zu werden, wodurch eine Überzugsschicht auf der dritten Schiene (6) gebildet wird, **dadurch gekennzeichnet, dass** die Patina-Erzeugungsvorrichtung (50) keine elektrische Verbindung aufweist.

2. Patina-Erzeugungsvorrichtung (50) nach Anspruch 1, wobei der Stab (50a) aus einer Kohlenstoff-Kupfer-Legierung gefertigt ist.

3. Patina-Erzeugungsvorrichtung nach Anspruch 1 oder 2, wobei der Stab (50a) über ein Trägerelement (54) mit einem Tragarm (52) verbunden ist, wobei der Tragarm (52) angeordnet ist, um an einer Trägerstruktur (56) befestigt zu werden, die wiederum an dem Eisenbahnwagen (4) befestigt werden soll.

4. Patina-Erzeugungsvorrichtung (50) nach einem der vorherigen Ansprüche, wobei der Stab (50a) von oben, von unten oder seitlich mit der dritten Schiene (6) in Kontakt gebracht wird.

5. Patina-Erzeugungsvorrichtung nach einem der vorherigen Ansprüche, wobei jeder Stab (50a) zwischen 100 und 500 mm lang ist.

6. Patina-Erzeugungsvorrichtung nach einem der vorherigen Ansprüche, wobei jeder Stange (50a) zwischen 40 mm und 100 mm breit ist.

7. Patina-Erzeugungsvorrichtung nach einem der vorherigen Ansprüche, wobei die Stange (50a) zwischen 40 mm und 100 mm stark ist.

8. Patina-Erzeugungsvorrichtung nach einem der Ansprüche 5 bis 7, wobei jeder Stab (50a) 300 mm lang, 60 mm breit und 40 mm stark ist.

9. Schienenfahrzeug (100), umfassend eine Patina-Erzeugungsvorrichtung (50) nach einem der vorherigen Ansprüche.

## Revendications

1. Dispositif de création de patine (50) conçu pour être relié à un wagon (4), et pour être mis en contact avec un troisième rail (6) s'étendant parallèlement à un rail (2) d'une ligne de chemin de fer sur laquelle le wagon (4) est placé, ledit dispositif de création de patine (50) comprenant au moins une barre (50a) s'étendant le long d'un axe longitudinal du troisième rail (6) et conçue pour être consommée par frottement contre le troisième rail (6), formant ainsi une couche de revêtement sur ledit troisième rail (6), **caractérisé en ce que** le dispositif de création de patine (50) est dépourvu de connectivité électrique.

2. Dispositif de création de patine (50) selon la revendication 1, dans lequel la barre (50a) est constituée d'un alliage carbone-cuivre.

3. Dispositif de création de patine selon la revendication 1 ou 2, dans lequel ladite barre (50a) est reliée à un bras de support (52) par l'intermédiaire d'un élément de support (54), ledit bras de support (52) étant conçu pour être fixé à une structure de support (56) qui, à son tour, doit être fixée au wagon (4).

4. Dispositif de création de patine (50) selon l'une quelconque des revendications précédentes, dans lequel la barre (50a) est mise en contact avec le troisième rail (6) par le haut, par le bas ou latéralement.

5. Dispositif de création de patine selon l'une quelconque des revendications précédentes, dans lequel chaque barre (50a) a une longueur comprise entre 100 et 500 mm.

6. Dispositif de création de patine selon l'une quelconque des revendications précédentes, dans lequel chaque barre (50a) a une largeur comprise entre 40 mm et 100 mm.

7. Dispositif de création de patine selon l'une quelconque des revendications précédentes, dans lequel la barre (50a) a une épaisseur comprise entre 40 mm et 100 mm.

8. Dispositif de création de patine selon l'une quelconque des revendications 5 à 7, dans lequel chaque barre (50a) mesure 300 mm de long, 60 mm de large et 40 mm d'épaisseur.

9. Wagon (100) comprenant un dispositif de création de patine (50) selon l'une quelconque des revendications précédentes.
